# EUROPÄISCHE PATENTSCHRIFT

(11) **EP 1 216 861 B1**
(45) Veröffentlichungstag und Bekanntmachung des Hinweises auf die Patenterteilung: **06.02.2008**
(21) Anmeldenummer: 01126738.2
(22) Anmeldetag: 09.11.2001
(51) Int. Cl.: B60H 1/00

(54) **Einrichtung zur Steuerung von Luftströmen in Heiz- oder Klimaanlagen von Kraftfahrzeugen**
Arrangement for guiding a flow of air in a vehicle heating or air conditioning device
Dispositif de guidage d'écoulements d'air dans les installations de chauffage ou de climatisation de véhicule

(30) Priorität: 20.12.2000 DE 10065204
(43) Veröffentlichungstag der Anmeldung: 26.06.2002
(73) Patentinhaber: Behr GmbH & Co. KG, 70469 Stuttgart (DE)
(72) Erfinder: Denk, Walter, 71254 Ditzingen (DE); Lochmahr, Karl, Dipl.-Ing.(FH), 71665 Vaihingen (DE); Voigt, Klaus, Dipl.-Ing., 74321 Bietigheim-Bissingen (DE); Waibel, Klaus, 70806 Kornwestheim (DE)

(56) Entgegenhaltungen:
- EP-A- 0 453 807
- DE-A- 19 819 996

## Beschreibung

Die Erfindung betrifft eine Einrichtung zur Steuerung von Luftströmen in Heiz- oder Klimaanlagen von Kraftfahrzeugen mit einem Gehäuse mit mindestens einer in einem Strömungskanal angeordneten Steuerklappe, die von einer Abtriebswelle eines außerhalb des Strömungskanals angeordneten Getriebemotors verschwenkbar ist.

Eine solche Einrichtung ist zum Beispiel aus der DE-A-198 19 996 bekannt.

Heiz- oder Klimageräte dieser Art sind bekannt. Die zum Antrieb der Stellklappen vorgesehenen elektrischen Getriebemotoren werden dabei in der Regel auf Schraubdome aufgesetzt, die von der Gehäusewand des Klimagerätes nach außen abstehen und dort nach Kupplung der Antriebsachse mit der Stellklappe verschraubt werden. Zwischen der Wand des Klimagerätes und dem Getriebemotor verbleibt dabei ein gewisser Zwischenraum, der von der Abtriebswelle des Getriebemotors überbrückt wird. Die Montage der Getriebemotoren, insbesondere die Kupplung ihrer Abtriebsachse mit der Stellklappe ist verhältnismäßig aufwendig.

Der vorliegenden Erfindung liegt die Aufgabe zugrunde, eine Einrichtung der eingangs genannten Art so auszugestalten, dass die Montage wesentlich vereinfacht werden kann. Außerdem soll auch der Raumbedarf für die Anordnung der Getriebemotoren so klein wie möglich gehalten werden.

Zur Lösung dieser Aufgabe wird erfindungsgemäß bei einer Einrichtung der eingangs genannten Art vorgesehen, dass die Abtriebswelle als eine an einem Ende mit einem Anschlag versehene Einsteckwelle ausgebildet und drehfest bis zum Anschlag durch ein Abtriebsrad des Getriebemotors und durch ein koaxiales Lager der Schwenkachse der Steuerklappe hindurchgeschoben und in dieser Lage gesichert ist. Durch diese Ausgestaltung wird eine äußerst einfache Kupplung der Stellklappe mit dem Getriebemotor erreicht, ohne dass besondere Vorkehrungen getroffen werden müssen. Die Lagerung an der Schwenkklappe und die entsprechende Ausgestaltung des Getriebes des Antriebs reichen aus, um die Montage zu gewährleisten.

Dabei kann in einfacher Weise die Einsteckwelle mit einem Abschnitt versehen sein, der als Vielkantprofil ausgebildet ist und mit einem Gegenprofil der Schwenkachse zusammenwirkt. Mit dem Einstecken der Abtriebswelle ist daher auch die drehfeste Verbindung derselben mit der Stellklappe bewirkt.

In Weiterbildung der Erfindung kann der Anschlag als eine Anschlagscheibe ausgebildet sein, die mit seitlichen Anschlagflächen einer in den Drehbereich der Anschlagscheibe hereinragenden Nase des Gehäuses des Getriebemotors zusammenwirkt. Diese Ausgestaltung stellt zum einen die Endlage der Einsteckwelle sicher, sie ermöglicht aber auch in einfacher Weise eine Begrenzung der Schwenkbewegung der Stellklappe.

In Weiterbildung der Erfindung kann die Einsteckwelle auf der an den Anschlag angrenzenden Seite mit einem weiteren Antriebsteil versehen sein, der beispielsweise als ein Betätigungshebel für weitere Stellvorgänge oder auch als ein Antriebszahnrad zur Verbindung mit anderen anzutreibenden Teilen ausgebildet sein kann.

In weiterer Ausgestaltung der Erfindung kann die Einsteckwelle an ihrem von der Anschlagscheibe abgewandten Ende mit einem Rastkopf versehen werden, der mit einer Rastverengung innerhalb des Lagers der Steuerklappe oder innerhalb einer hohl ausgebildeten Schwenkachse für die Steuerklappe zusammenwirkt. Diese Ausgestaltung bewirkt, dass die Einsteckwelle in ihrer Endstellung axial gesichert gehalten ist, ohne dass zusätzliche Befestigungsvorgänge notwendig werden.

In Weiterbildung der Erfindung kann das Gehäuse des Antriebsmotors quaderförmig ausgebildet und mit einer flachen Seite unmittelbar an eine Seitenwand des Gehäuses für den Strömungskanal angelegt sein. Diese Ausgestaltung macht den Einsatz einer verhältnismäßig kurzen Einsteckwelle möglich und verringert den Raumbedarf für die Gesamtanordnung. Die Drehsicherung des Gehäuses des Getriebemotors kann dabei über Profilstutzen erfolgen, welche die Gehäuseecken umfassen. Die flache Seite des Getriebemotorgehäuses kann aber in Weiterbildung der Erfindung auch mit einem Rastzapfen versehen sein, der zur Drehsicherung in eine Öffnung der Wand des Strömungskanals eingreift und so zusammen mit der Einsteckwelle die Lagesicherung des Getriebemotors erlaubt, ohne dass aufwendige Befestigungsarbeiten erforderlich sind.

Die Erfindung ist anhand von Ausführungsbeispielen in der Zeichnung dargestellt und wird im folgenden erläutert. Es zeigen:
- Fig. 1: eine perspektivische schematische Darstellung von nebeneinanderliegenden Strömungskanälen eines nicht näher gezeigten Heizungs- oder Klimagerätes für ein Kraftfahrzeug, bei dem in den Strömungskanälen Schwenkklappen zur Steuerung der Luftströme angeordnet sind, die durch elektrische Getriebemotoren antreibbar sind,
- Fig. 2: einen der Strömungskanäle der Fig. 1 in einer Explosionsdarstellung mit dem anzusetzenden Getriebemotor,
- Fig. 3: eine Variante der Ausgestaltung nach Fig. 2,
- Fig. 4: eine Einzelteildarstellung der Ausführungsform der Fig. 2 in einer Explosionsdarstellung,
- Fig. 5: eine dritte Variante eines Ausführungsbeispieles mit einem Getriebemotor nach der Erfindung in montiertem Zustand ,
- Fig. 6: die Ausführungsform der Fig. 5 in einer Explosionsdarstellung,
- Fig. 7: eine vierte Variante einer erfindungsgemäßen Ausgestaltung und
- Fig. 8: einen Schnitt durch die Ausführungsform der Fig. 7 in montiertem Zustand.

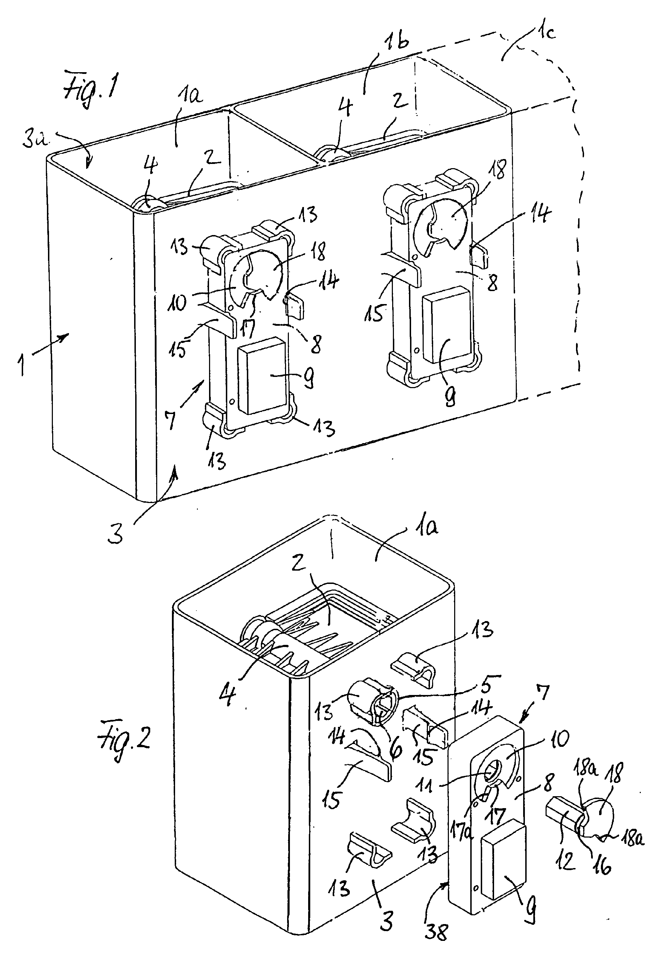

Fig. 1 zeigt zwei nebeneinander liegende Strömungskanäle 1a und 1b, die Teil eines Gehäuses 1 einer Heizungs- oder Klimaanlage eines Kraftfahrzeuges sind. Gestrichelt angedeutet ist ein weiterer Strömungskanal 1c, der, wie auch die Strömungskanäle 1a und 1b zur Steuerung von Luftströmen innerhalb des Heiz- oder Klimagerätes dient. Bekanntlich werden im Kraftfahrzeug Luftströme an verschiedene Stellen geleitet, beispielsweise zu Austrittsdüsen unterhalb der Windschutzscheibe, zu Austrittsdüsen im oberen Bereich von Fahrer- oder Beifahrerseite, zu Austrittsdüsen im Fußbereich von Fahrer und Beifahrer, oder auch in den Fondbereich des Fahrzeuges.

Um diese Luftströme, die von einem zentralen Gebläse aus gefördert werden, individuell einstellen zu können, sind die Strömungskanäle 1a, 1b - natürlich analog auch 1c usw. - mit Strömungsklappen 2 versehen, die als Schwenkklappen ausgebildet sind und um eine in gegenüberliegenden Wandungen 3 und 3a des Strömungskanales gelagerte Welle 4 schwenkbar sind. Diese Welle 4 ist beim gezeigten Ausführungsbeispiel der Fig. 1 und 2 als eine Hohlwelle ausgebildet, die drehbar in einem Lager 5 gehalten ist. Die Hohlwelle 4 ist dabei mit einem in den Fig. 2 und insbesondere 3 erkennbaren Innensechskantprofil 6 ausgerüstet. Die Schwenkbewegung der Steuerklappe 2 wird durch einen Getriebemotor 7 bewirkt, der ein quaderförmiges Gehäuse 8 aufweist, das mit einem Anschlussstecker 9 für den Anschluss eines elektrischen Versorgungskabels versehen ist. Das Gehäuse 8 enthält einen kleinen Schrittschaltmotor, der über ein Getriebe mit einem Abtriebsrad 10 in Verbindung steht, das einen zentralen, als Innensechskant ausgebildeten Steckbereich 11 für eine Sechskantwelle 12 besitzt, die gemäß Fig. 2 von außen durch das Abtriebsrad 10 in den Innensechskant 6 des Lagers 5 eingeführt wird, wenn der Getriebemotor 7 in der in Fig. 1 dargestellten Lage jeweils an der Außenwand 3 angebracht ist.

Dies geschieht beim Ausführungsbeispiel dadurch, dass das quaderförmige Gehäuse 8 von außen passend zwischen vier Fixierrippen (Profilstutzen) 13 eingesetzt und gegen die Wand 3 gedrückt wird, bis die Rasthaken 14 von gegenüberliegenden Rastlaschen 15 sich an der Außenseite des Gehäuses 8 verklammern und die Laschen 15 das Gehäuse 8 seitlich übergreifen. Der Getriebemotor 7 lässt sich auf diese Weise, wie Fig. 1 zeigt, in einfacher Weise von außen an die Wand 3 anclipsen. Die Abtriebswelle (Sechskantwelle)12 wird dann durch das Abtriebsrad 10 in den Sechskantteil 6 der Hohlwelle 4 eingeschoben, wobei sie in ihrer Montagelage, beispielsweise durch einen Rastring 16 an einer Nase 17 im Bereich des Abtriebsrades 10 axial gehalten sein kann. Die Abtriebswelle 12 ist außerdem auf der von der Schwenkklappe 2 abgewandten Seite mit einer - einstückig angeformten oder getrennt aufgesteckten - Anschlagscheibe 18 versehen, die in die angrenzend an die Nase 17 vorgesehen Aussparung hereinpasst und aufgrund ihrer Ausgestaltung zur Auschlagbegrenzung der Schwenkklappe 2 dient, indem sie mit ihren Endflächen 18a an die Begrenzungsflächen an der Nase 17 anschlägt.

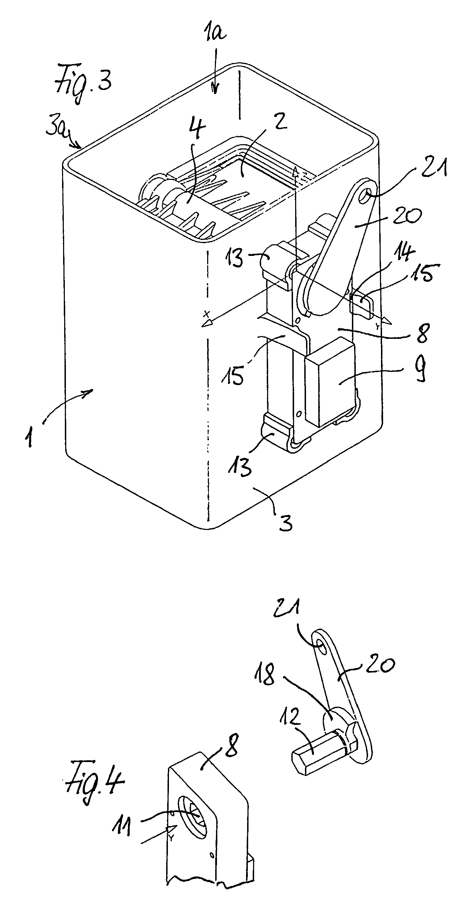

Die Fig. 3 und 4 zeigen eine Variante insofern, als hier unmittelbar angrenzend an die Anschlagscheibe 18 ein zusätzlicher Betätigungshebel 20 angesetzt ist, der dazu ausgenützt werden kann, mit der Verstellung der Steuerklappe 2 noch ein weiteres Teil zu verstellen, wobei zu diesem Zweck beispielsweise eine Steuerstange in der Bohrung 21 angelenkt werden kann.

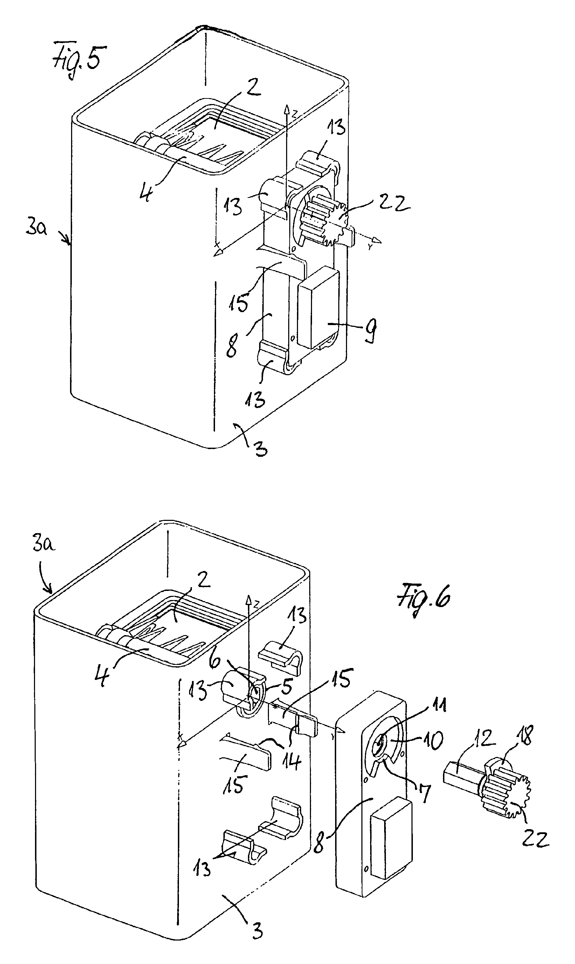

Die Fig. 5 und 6 zeigen die Möglichkeit, angrenzend an die Anschlagscheibe 18 ein Zahnritzel 22 anzusetzen, das ebenfalls dazu ausgenützt werden kann, einen Antrieb eines zusätzlichen Aggregates oder Teiles zu bewirken, wobei hier die Ausgestaltung des Ritzels 22 so sein kann, dass es als Antriebsteil eines Zahnradgetriebes oder als Antriebsteil eines Zahnriementriebes dient.

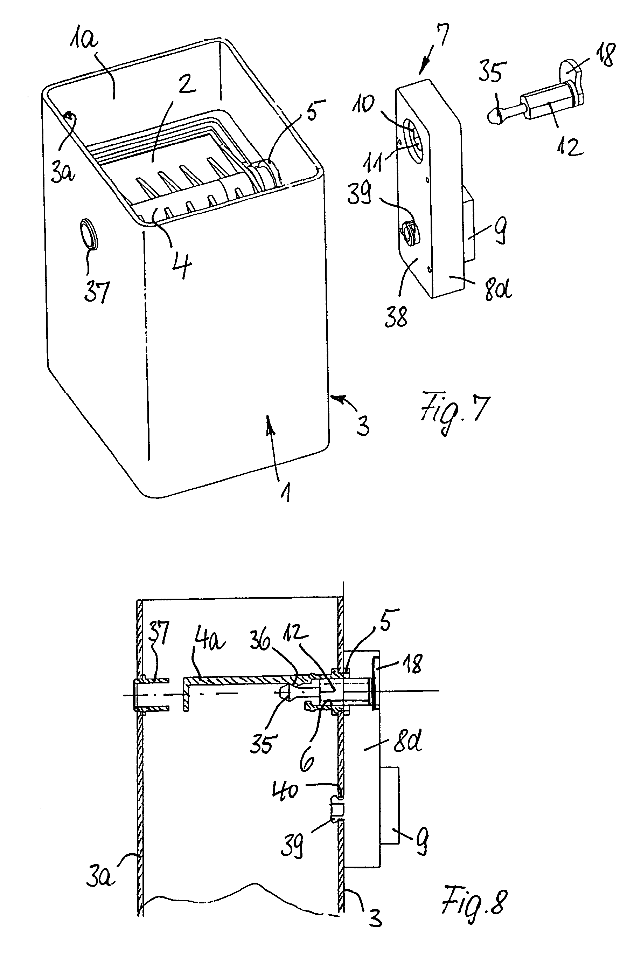

Die Fig. 7 und 8 zeigen nun eine Variante für die Anordnung des Getriebemotors 7. Hier ist ähnlich wie im Ausführungsbeispiel der Fig. 5 das freie Ende der Abtriebswelle 12 mit einem Rastkopf 35 versehen, der hinter eine Rastverengung 36 innerhalb der Hohlwelle 4a greift und so für eine Befestigung des Gehäuses 8d des Getriebemotors 7 an der Wand 3 des Gehäuses 1 sorgt. Die Hohlwelle 4a ist im übrigen in nicht näher gezeigter Weise außer in dem Lager 5 auch in dem der zweiten Wand 3a zugeordneten Lager 37 geführt und axial gehalten. Die Einzelheiten dieser Lagerung sind hier nicht näher gezeigt.

Um die eindeutige Befestigungslage des Gehäuses 8d zu sichern, ist dieses Gehäuse auf der der Wand 3 zugewandten Seite, auf der es im übrigen ebenso wie die anderen in den vorhergehenden Figuren gezeigten quaderförmigen Gehäuse eine ebene Wand 38 aufweist, mit einem Rastzapfen 39 versehen, der, wie Fig. 8 zeigt, durch eine entsprechende Öffnung 40 in der Wand 3 greift und so ein Verdrehen des Gehäuses 8d des Getriebemotors 7 sicher verhindert. Wie aus den Fig. 7 und 8 ohne weiteres erkennbar ist, kann das Gehäuse 8d durch diesen Zapfen 39 durch einfaches Andrücken an die Wand 3 vorfixiert werden. Es kann dann in die Lage gedreht werden, in der die Welle 12 sich durch die Öffnung 11 und durch den Innenkant 6 hindurchschieben lässt, bis der Rastkopf 35 hinter der Verengung 36 gehalten wird. Die Montage des Getriebemotors 7 ist dann bereits in einfacher Weise beendet.

Bei allen Ausführungsformen liegt das Gehäuse des Getriebemotors 7 mit einem flachen Wandteil 38, der in den Fig. 1 bis 6 auf der vom Betrachter abgewandten Seite liegt, unmittelbar an der Gehäusewand 3 an. Der Raumbedarf für diese Antriebsanordnung ist daher minimal.

## Patentansprüche

1. Einrichtung zur Steuerung von Luftströme in Heiz- oder Klimaanlagen von Kraftfahrzeugen mit einem Gehause (1) mit einem Strömungskanal (1a) und mit mindestens einer in dem Strömungskanal (1a) angeordneten Steuerklappe (2), die von einer Abtriebswelle (12) eines au-ßerhalb des Strömungskanals angeordneten Getriebemotors (7) verschwenkbar ist,
**dadurch gekennzeichnet, dass**
die Abtriebswelle (12) als eine an einem Ende mit einem Anschlag (18) versehene Einsteckwelle ausgebildet und drehfest bis zum Anschlag durch ein Abtriebsrad (10) des Getriebemotors (7) und durch ein koaxiales Lager (6) der Schwenkachse (4) der Steuerklappe (2) hindurchgeschoben und in dieser Lage gesichert ist.

2. Einrichtung nach Anspruch 1, **dadurch gekennzeichnet, dass** die Einsteckwelle (12) mit einem Abschnitt versehen ist, der als Vielkantprofil ausgebildet ist und mit einem Gegenprofil (6, 11) der Schwenkachse (4) zusammenwirkt.

3. Einrichtung nach Anspruch 1, **dadurch gekennzeichnet, dass** der Anschlag als eine Anschlagscheibe (18) ausgebildet ist, die nicht über 360° verläuft und mit ihren in Umfangsrichtung weisenden Endflächen (18a) mit Anschlagflächen (17a) einer in den Drehbereich der Anschlagscheibe (18) hereinragenden Nase (17) des Gehäuses (8) des Getriebemotors (7) zusammenwirkt.

4. Einrichtung nach einem der Ansprüche 1 bis 3, **dadurch gekennzeichnet, dass** die Einsteckwelle (12) auf der an den Anschlag (18) angrenzenden Seite mit einem zusätzlichen Abtriebsteil (20, 22) versehen ist.

5. Einrichtung nach Anspruch 4, **dadurch gekennzeichnet, dass** der zusätzliche Abtriebsteil ein drehfest aufgesetzter Betätigungshebel (20) ist.

6. Einrichtung nach Anspruch 4, **dadurch gekennzeichnet, dass** der zusätzliche Abtriebsteil ein drehfest aufgesetztes Antriebszahnrad (22) ist.

7. Einrichtung nach Anspruch 3, **dadurch gekennzeichnet, dass** die Einsteckwelle (12) an ihrem von der Anschlagscheibe (18) abgewandten Ende mit einem Rastkopf (35) versehen ist, der mit einer Rastverengung (36) innerhalb des Lagers (6) der Schwenkachse (4) der Steuerklappe (2) oder innerhalb einer hohl ausgebildeten Schwenkachse (4a) für die Steuerklappe zusammenwirkt.

8. Einrichtung nach Anspruch 1, **dadurch gekennzeichnet, dass** das Gehäuse (8 ; 8d) des Getriebemotors (7) quaderförmig ausgebildet und mit einer flachen Seite (38) unmittelbar an eine Seitenwand (3) des Gehäuses (1) für den Strömungskanal (1a) angelegt ist.

9. Einrichtung nach Anspruch 8, **dadurch gekennzeichnet, dass** die Drehsicherung des Gehäuses (8) des Getriebemotors (7) über Profilstutzen (13) erfolgt, welche die Gehäuseecken umfassen.

10. Einrichtung nach Anspruch 8, **dadurch gekennzeichnet, dass** die flache Seite (38) des Gehäuses (8) des Getriebemotors (7) mit einem Rastzapfen (39) versehen ist, der zur Drehsicherung in eine Öffnung (40) der Wand (3) des Strömungskanals (1) eingreift.

## Claims

1. Device for the control of air flows in heating or air conditioning systems, with a housing (1) with a flow duct (1a) and at least one control damper (2) located in the flow duct (1 a) and capable of being pivoted by the drive shaft (12) of a gear motor (7) located outside the flow duct,
**characterised in that**
the drive shaft (12) is designed as a plug-in shaft provided with a stop (18) at one end and is non-rotatably inserted up to the stop through a drive gear (10) of the gear motor (7) and through a coaxial bearing (6) of the pivoting axis (4) of the control damper (2) and secured in this position.

2. Device according to claim 1, **characterised in that** the plug-in shaft (12) includes a section designed as a square section and acting together with a mating section (6, 11) of the pivoting axis (4).

3. Device according to claim 1, **characterised in that** the stop is designed as a stop disk (18) which does not extend over 360°, its end faces (18a) oriented in the circumferential direction acting together with stop surfaces (17a) of a nose (17) of the housing (8) of the gear motor (7), which extends into the region of rotation of the stop disk (18).

4. Device according to any of claims 1 to 3, **characterised in that** the plug-in shaft (12) is provided with an additional output part (20, 22) on the side adjoining the stop (18).

5. Device according to claim 4, **characterised in that** the additional output part is a non-rotatably mounted operating lever (20).

6. Device according to claim 4, **characterised in that** the additional output part is a non-rotatably mounted drive gear (22).

7. Device according to claim 3, **characterised in that** the end of the plug-in shaft (12) which is remote from the stop disk (18) is provided with a locking button (35) acting together with a locking neck (36) within the bearing (6) of the pivoting axis (4) of the control damper (2) or within a hollow pivoting axis (4a) of the control damper.

8. Device according to claim 1, **characterised in that** the housing (8; 8d) of the gear motor (7) has a cuboid shape, one of its flat sides (38) immediately adjoining a side wall (3) of the housing (1) for the flow duct (1a).

9. Device according to claim 8, **characterised in that** the housing (8) of the gear motor (7) is secured against rotation by profiled connection pieces (13) enclosing the housing corners.

10. Device according to claim 8, **characterised in that** the flat side (38) of the housing (8) of the gear motor (7) is provided with a locking dowel (39) engaging an opening (40) in the wall (3) of the flow duct (1) to act as a rotation lock.

## Revendications

1. Dispositif pour la commande de flux d'air, dans des systèmes de chauffage ou de climatisation de véhicules automobiles, comprenant un conduit d'écoulement (1a) et au moins un volet de commande (2) disposé dans le conduit d'écoulement (la), volet de commande qui peut pivoter grâce à un arbre de sortie (12) d'un motoréducteur (7) disposé à l'extérieur du conduit d'écoulement,
**caractérisé en ce que** l'arbre de sortie (12) est conçu comme un arbre récepteur doté d'une butée (18), à une extrémité, et poussé, solidaire en rotation, jusqu'à la butée, par une roue menée (10) du motoréducteur (7) et par un palier coaxial (6) de l'axe de pivotement (4) du volet de commande (2), et fixé dans cette position.

2. Dispositif selon la revendication 1, **caractérisé en ce que** l'arbre récepteur (12) est doté d'une partie qui est configurée comme un profilé polyédrique et agit conjointement avec un contre-profilé (6, 11) de l'axe de pivotement (4).

3. Dispositif selon la revendication 1, **caractérisé en ce que** la butée est conçue comme un disque de butée (18) qui ne s'étend pas sur 360° et, par ses surfaces d'extrémité (18a) pointant dans la direction circonférentielle, agit conjointement avec des surfaces de butée (17a) d'un mentonnet (17) du carter (8) du motoréducteur (7) pénétrant dans la zone de rotation du disque de butée (18).

4. Dispositif selon l'une quelconque des revendications 1 à 3, **caractérisé en ce que** l'arbre récepteur (12) est doté, sur le côté contigu à la butée (18), d'une pièce de sortie supplémentaire (20, 22).

5. Dispositif selon la revendication 4, **caractérisé en ce que** la pièce de sortie supplémentaire est un levier d'actionnement rapporté (20) solidaire en .rotation.

6. Dispositif selon la revendication 4, **caractérisé en ce que** la pièce de sortie supplémentaire est une roue dentée motrice (22), rapportée et solidaire en rotation.

7. Dispositif selon la revendication 3, **caractérisé en ce que** l'arbre récepteur (12) est doté, sur son côté placé à l'opposé du disque de butée (18), d'une tête de blocage d'arrêt (35) qui agit conjointement avec un rétrécissement d'arrêt (36), à l'intérieur du palier (6) de l'axe de pivotement (4) du volet de commande (2) ou bien à l'intérieur d'un axe de pivotement creux (4a) prévu pour le volet de commande.

8. Dispositif selon la revendication 1, **caractérisé en ce que** le carter (8 ; 8d) du motoréducteur (7) est configuré en étant de forme rectangulaire et, par un côté plat (38), s'applique directement contre une paroi latérale (3) du carter (1), prévue pour le conduit d'écoulement (1a).

9. Dispositif selon la revendication 8, **caractérisé en ce que** la protection antitorsion du carter (8) du motoréducteur (7) est réalisée grâce à des tubulures profilées (13) qui entourent les parties angulaires du carter.

10. Dispositif selon la revendication 8, **caractérisé en ce que** le côté plat (38) du carter (8) du motoréducteur (7) est doté d'un tourillon d'arrêt (39) qui s'engage dans une ouverture (40) de la paroi (3) du conduit d'écoulement (1), pour empêcher la torsion.
